(19) Europäisches Patentamt
European Patent Office
Office européen des brevets

(11) **EP 3 835 472 B1**

(12) **EUROPEAN PATENT SPECIFICATION**

(45) Date of publication and mention of the grant of the patent:
**05.03.2025 Bulletin 2025/10**

(21) Application number: **18804500.9**

(22) Date of filing: **28.09.2018**

(51) International Patent Classification (IPC):
***D05C 17/02*** *(2006.01)* ***B60N 3/04*** *(2006.01)*

(52) Cooperative Patent Classification (CPC):
**D05C 17/026; B60N 3/048;** D10B 2331/04; D10B 2505/12

(86) International application number:
**PCT/KR2018/011587**

(87) International publication number:
**WO 2020/032316 (13.02.2020 Gazette 2020/07)**

# (54) AUTOMOTIVE TUFTED CARPET COMPRISING POLYETHYLENETEREPHTHALATE BULKED CONTINUOUS FILAMENTS

KFZ-TUFTTEPPICH MIT POLYETHYLENTEREPHTHALAT-ENDLOSGARN

TAPIS TOUFFETÉ AUTOMOBILE COMPRENANT DES FILAMENTS CONTINUS GONFLANTS EN POLYÉTHYLÈNE TÉRÉPHTALATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2018 KR 20180092998**

(43) Date of publication of application:
**16.06.2021 Bulletin 2021/24**

(73) Proprietor: **HYOSUNG ADVANCED MATERIALS CORPORATION**
**Seoul 04144 (KR)**

(72) Inventor: **KWON, Yong Chul**
**Gunpo-si**
**Gyeonggi-do 15872 (KR)**

(74) Representative: **v. Bezold & Partner**
**Patentanwälte - PartG mbB**
**Ridlerstraße 57**
**80339 München (DE)**

(56) References cited:
**JP-A- 2002 180 340**
**JP-A- 2010 116 630**
**JP-A- 2013 102 787**
**JP-A- H08 127 916**
**KR-A- 20180 086 321**
**KR-B1- 100 415 731**
**KR-B1- 100 663 254**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 835 472 B1

## Description

### Technical Field

The present invention relates to a method for producing a polyethylene terephthalate bulked continuous filament yarn suitable for use in automobiles, the use of a BCF yarn obtained by this method for producing a tufted carpet for automobiles and a BCF yarn obtained by this method.

### Background Art

Generally, nylon 6, nylon 66, polypropylene, polyethylene terephthalate, and the like are used as a synthetic fiber material of a bulk continuous filament (BCF) as a material for a tufted carpet. Among them, nylon is the most suitable material for carpet, but it has a disadvantage of high price, so low-priced polypropylene is used as a substitute.

However, since polypropylene is not suitable for use in automobile carpets that are molded at high temperatures due to its low heat resistance, non-woven type needle punches of low quality but inexpensive prices are often used. However, since the needle punch nonwoven fabric has a disadvantage in that the quality of the appearance is lower than that of the tufted carpet and the abrasion resistance is poor, development of a tufted carpet material of a low price is demanded.

In recent years, in order to solve the above problems, attempts have been made to use BCF as a carpet for automobiles, the BCF made by using a polyethylene terephthalate material having excellent characteristics in comparison with other materials in terms of economy and having a high heat resistance, but polyethylene terephthalate has a high weight relative to nylon, so it has a disadvantage in terms of price because it has to increase the weight of yarn planted per unit area in order to produce the same appearance. In addition, since the bulk stability of the yarn is lower than that of nylon, there is a problem that the yarn is pressed after molding, and the feeling of volume is lowered.

JP 2013-102787 A discloses a carpet using polyester fibers made of raw materials derived from biomass resources in the pile portion.

JP H08-127916 A relates to a polyester crimped yarn for carpet and carpet thereof.

### Disclosure

### Technical Problem

An object of the present invention is to provide a polyethylene terephthalate bulked continuous filament yarn which has an improved crimp ratio and is suitable for use as an automobile carpet, and a method for producing the same.

Another object of the present invention is to use the yarn for producing a tufted carpet including the polyethylene terephthalate bulked continuous filament yarn, which is improved in the sense of volume of the outer appearance and in the quality of abrasion resistance.

### Technical Solution

These problems are solved by the method of claim 1, the use of claim 3 and the yarn of claim 5.

According to an aspect of the present invention, there is provided a tufted carpet for automobiles including: a pile layer including polyethylene terephthalate (PET) bulked continuous filament (BFC) yarn; and at least one backing layer, in which the bulked continuous filament yarn has a crimp ratio of 16% or more and wherein the filaments have a cross-sectional modification ratio of 1.9 to 3.4.

Herein, the fineness of the bulked continuous filament is 6.67 to 22.22 dtex per filament (6 to 20 denier per filament), and the bulked continuous filament yarns have a fineness of 777.7 to 1666.5 dtex (700 to 1500 denier).

Further, wherein the pile layer weighs 180 gsm to 700 gsm.

Further, a wear resistance level according to MS343-15 standard may be grade 3 or more.

### Advantageous Effects

In the method of manufacturing a polyethylene terephthalate bulked continuous filament yarn according to the present invention, the filament yarn is passed through a texturing nozzle to quench the filament, thereby lowering the heat shrinkage of the filament yarn, thereby improving the crimp ratio, compared to the conventional level.

Further, by adjusting the cross-sectional profile of the filament to a specific range, the sense of volume of the filament yarn can be increased, and the tufted carpet to which such a filament is applied can also improve the sense of volume and the quality of wear resistance of the appearance.

## Brief Description of the Drawings

FIG 1 is a schematic view of an apparatus for producing polyethylene terephthalate bulked continuous filaments according to an example of the present invention.
FIG 2 is a schematic view of a tufted carpet according to an example of the present invention.

## Detailed Description of the Preferred Embodiments

The present invention is capable of various modifications and various forms, and specific examples are described in detail in the following description. It should be understood, however, that the invention is not intended to be limited to the particular forms disclosed, but on the contrary, is intended to cover all modifications, equivalents, and alternatives falling within the scope of the claims.

In this application, the terms "include" or "having", etc., are used to specify that there is a feature, figure, step, operation, element, part or combination thereof which is stated in the specification, and that it should not be construed to preclude the presence or addition of one or more other features, integers, steps, operations, components, parts, or combinations thereof. Also, when a part such as a layer, film, region, plate, or the like is referred to as being "on" another part, this includes not only the case where it is "directly over" another part, but also a case where there is another part therebetween. On the contrary, when a part such as a layer, film, region, plate or the like is referred to as being "under" another part, it includes not only the case where it is "directly under" another part, but also the case where there is another part in the middle.

Hereinafter, examples of the present invention will be described in detail. Hereinafter, the method for producing a polyethylene terephthalate bulked continuous filament yarn according the present invention and preferred embodiments will be described with reference to the drawings. FIG 1 is a schematic view of an apparatus for producing polyethylene terephthalate bulked continuous filament yarns according to the present invention.

A method of producing polyethylene terephthalate bulked continuous filament yarns includes melt spinning a polyethylene terephthalate chip.

The polyethylene terephthalate chip is preferably prepared by liquid phase polymerization or solid phase polymerization. At this time, it is preferable to use a batch or continuous polymerization method for the solid phase polymerization, but the present invention is not limited to this example. More specifically, the solid phase polymerization is carried out under vacuum conditions at 110 to 170°C for 4 to 6 hours to remove moisture, and the temperature is raised from 235 to 255°C for 4 to 6 hours, and the solid phase polymerization time is preferably 20 to 30 hours.

As described above, the liquid phase polymerization or solid phase polymerized polyethylene terephthalate chips are melt-spun at 245-335°C and passed through a spinneret 1.

The polyethylene terephthalate resin that is the basis of the present invention preferably contains at least 90 mol% of repeating units of ethylene terephthalate.

Alternatively, the polyethylene terephthalate may include a small amount of units derived from ethylene glycol and terephthalenedicarboxylic acid or derivatives thereof and one or more ester-forming components as copolymer units. Examples of other ester forming components copolymerizable with the polyethylene terephthalate unit include glycols such as 1,3-propanediol, 1,4-butanediol, 1,6-hexanediol and the like, and dicarboxylic acid such as terephthalic acid, isophthalic acid, hexahydroterephthalic acid, stilbene dicarboxylic acid, bibenzoic acid, adipic acid, sebacic acid, and azelaic acid.

The fineness of the polyethylene terephthalate yarn thus produced is 777.7 to 1666.5 dtex (700 to 1500 denier) and preferably 944.35 to 1499.85 dtex (850 to 1350 denier). The fineness of the polyethylene terephthalate yarn is 6.67 to 22.22 dtex per filament (6 to 20 denier per filament), preferably 11.11 to 16.67 dtex per filament (10 to 15 denier per filament).

When the fineness of the yarn is less than 777.7 dtex (700 denier) and the fineness of the filaments is less than 6.67 dtex per filament (6 denier per filament), the uprightness of the fabric pile is lowered when the carpet is formed, resulting in poor abrasion resistance, molding restorability and appearance, and when the fineness exceeds 1666.5 dtex (1500 denier) or the fineness exceeds 22.22 dtex per filament (20 denier per filament), the density of the carpet fabric is lowered, resulting in poor abrasion resistance and restoring force.

Thereafter, the step of cooling the spun polyethylene terephthalate yarn is performed. At this time, the cooling step is a step of cooling the yarn at the cooling zone 3 with air at a speed of 0.2 to 1.0 m/sec. The cooling temperature is preferably adjusted to 10 to 30°C, and if the cooling temperature is less than 10°C, it is disadvantageous from the economical point of view. If the cooling air speed is less than 0.2 m/sec, the cooling effect is insufficient. If the cooling air speed is more than 1.0 m/sec, the shaking of the yarn is excessive, which will cause a problem in the spinning workability, and thus it is preferable that the speed of the cooling air is 0.2 to 1.0 m/sec.

After the cooling, a spin finish step of performing oiling is carried out. In a finishing applicator 4, oil is firstly and secondarily lubricated by using a neat type emulsion or a watersoluble emulsion, thereby increasing rolling speed, lubricity and smoothness of the yarn.

Thereafter, the filament yarn is fed to a stretching roller 6 at a speed of 300 to 1,200 m/min, preferably 500 to 800 m/min, on the feed roller 5. At this time, the stretching roller 6 is stretched at a speed of 2.0 to 5.0 times the feed roller 5 speed, preferably 2.5 to 4.5 times. If the stretching speed is less than 2.0 times, the stretching cannot be performed sufficiently. If the stretching speed is more than 5.0 times, the polyethylene terephthalate may not be stretched due to the nature of the material.

The filament yarn that has passed through the stretching roller 6 passes through a texturing unit 7 having a texturing nozzle for imparting a bulking property. At this time, a heating fluid of 150 to 270°C is sprayed in the texturing unit 7 with a pressure of 294 to 981 kPa (3 to 10 kg/$cm^2$) to thereby cause the filament to crimp irregularly in three dimensions.

In this case, the temperature of the heating fluid is preferably 150 to 250°C, and when the temperature is lower than 150°C, the texturing effect is lowered. If the temperature exceeds 250°C, the filament is damaged. In addition, the pressure of the heating fluid is preferably 294 to 981 kPa (3 to 10 kg/$cm^2$), and if less than 294 kPa (3 kg/$cm^2$), the texturing effect is lowered, and if it exceeds 981 kPa (10 kg/$cm^2$) the filament is damaged.

On the other hand, the crimp ratio is 16% or more. Polyethylene terephthalate has a high specific gravity, which causes a problem that the weight of yarn becomes higher than that of nylon which is generally used as a material of BCF per unit area of carpet. In order to solve this problem, the present invention increases the crimp ratio of the polyethylene terephthalate BCF yarn from the existing 10% level to 16% or more, thereby improving the sense of volume In addition, when the crimp ratio of the BCF yarn is increased, the bulkiness of the yarn itself is increased, so that the yarn can have a rich appearance and sense of volume even with a small yarn weight.

However, polyethylene terephthalate has a problem that it is difficult to increase the crimp ratio because the polymer is hard compared to nylon.

As described above, the yarn, which has passed through the stretching roller 6 having a high speed, is wound on the final winder via a texturing nozzle which gives a crimp through a relax roller 9 to be described later. At this time, the difference between the speed V1 of the stretching roller and the speed V2 of the relax roller is referred to as an over feed rate. This rate of overfeed is the source of the crimp and can be expressed as:

[Formula]

$$\text{Over Feed rate (\%)} = (V1-V2)/V1*100 = \text{Heat shrinkage rate} + \text{crimp ratio}$$

As described above, the yarn supplied from the stretching roller to the texturing nozzle is softened and compressed by the high-temperature, high-pressure air to have a sinuous crimp shape at the outlet of the texturing nozzle. Therefore, in order to increase the crimp ratio, the temperature and pressure of the air must be high, and in particular, polyethylene terephthalate has a higher melting point (Tm) than nylon, and thus a higher temperature is required. If the over feed rate is increased, it is possible to increase the crimp ratio. However, if the over feed rate is increased, the truncation occurs and the workability becomes poor. Therefore, it is not preferable to increase the over feed rate to increase the crimp ratio. In order to increase the crimp ratio at the same level over feed rate, the heat shrinkage should be lowered. Since the yarn whose temperature has been raised by passing through the texturing unit continually shrinks until being sufficiently cooled, cooling should be performed as fast as possible in order to lower the heat shrinkage.

Therefore, the present invention is characterized in that the thermal shrinkage of the yarn is lowered to increase the crimp ratio by quenching by cooling water or cooling air at the outlet of the texturing nozzle.

More specifically, the filament yarn that has passed through the texturing unit 7 is cooled through the cooling section. The cooling section may be a section where the filament yarn passing through the texturing unit is quenched with cooling water or cooling air. At this time, the temperature of the cooling water and the cooling air is 5 to 10°C and the pressure is preferably 294 to 981 kPa (3 to 10 kgf), and the desired quenching effect can be obtained within the above range, thereby lowering the heat shrinkage rate of the yarn, thereby increasing the crimp ratio to 16% or more.

Meanwhile, the cooling section may be a cooling drum 8 disposed at the lower end of the texturing nozzle, and may be a section for sucking air to quench the air. At this time, it is preferable that the cooling drum 8 is arranged to be separated from the texturing nozzle by less than 1 cm. In this case, the desired quenching effect can be obtained, thereby lowering the heat shrinkage rate of the yarn and increasing the crimp ratio to 16% or more.

The cooled raw yarn is passed through the relax roller 9 at a speed of 0.65 to 0.95 times the drawing roller speed to give an over feed rate of 5 to 35%. At this time, if the speed of the relax roller is less than 0.65 times the speed of the stretching roller, the paper is not wound. If the speed exceeds 0.95 times, the bulkiness is reduced, the shrinkage of the yarn is significantly increased, and high tension is caused, thereby interfering with the job. The yarn passed through the relax roller 9 passes through a collator 10. In this part, a slight twist and a knot are given at a pressure of 19.6 to 78.5 Pa (2.0 to 8.0 kg/$m^2$) in order to improve the rolling speed of the yarn, and it is given in the range of 0 to 40 times/m, preferably 10 to 25 times/m. In case of exceeding 40 times of being interlaced, even after dyeing and post-processing, the interlaced state is maintained and the appearance of the carpet is damaged. The yarn passed through the collator 10 is wound in the final winder 11.

The speed of the winder is preferably adjusted so that the tension of the yarn usually ranges from 50 to 350g. At this time, if the tension is less than 50g in the winder, the winding is impossible, and if it exceeds 350g, the bulkiness is decreased and the contraction of the yarn is largely caused and the high tension is generated.

On the other hand, in order to improve the carpet covering property by using a yarn with a small weight, the cross section of the filament is made into a trilobate shape (Y-shaped cross section), and this cross section shape is also important. The index that evaluates the cross-sectional shape is the modification ratio, the ratio of the circumscribed circle (Y2) to the inscribed circle (Y1), that is, Y2 / Y1. If the modification ratio is too high, the abrasion resistance will be disadvantageous. On the contrary, if the modification ratio is low, the volume feeling of the yarn will be low. Therefore, a proper degree of the modification ratio should be set. The modification ratio of the cross section is between 1.9 to 3.4

The above method relates to a BCF yarn produced only from a polyethylene terephthalate resin, and the stepwise process is the same as that described above in the case of producing a dope-dyed yarn according to the carpet use. However, it is also possible to manufacture a dope-dyed yarn by feeding a certain amount of coloring agents into the base chip input amount in the supply of the raw material and spinning it.

As described above, the polyethylene terephthalate multifilament prepared according to the present invention is manufactured as a carpet for automobiles through a post-process. Carpets made from the BCF yarns of the present invention can be prepared in any manner known to those skilled in the art. FIG. 2 shows a specific example of a tufted carpet for automobiles according to the present invention. The carpet has a face yarn 12 supported by a first base foil 13. At this time, the first base foil 13 is referred to as a backing layer, and the layer formed of the face yarn 12 is referred to as a pile layer. The face yarn 12, which is the outermost layer where the consumer feels the visual sensation by the eye, is formed of BCF yarn. The first base foil 13 is made of polyester or polyolefin and preferably has a spunbond or fabric shape of 90 to 150 gsm. Also, the pile layer including the face yarn 12 preferably has a weight of 180 to 700 gsm. Adjacent to the first base foil 13 is a coating layer 14 that fixes the face yarn 12, which is a suitable material conventionally used in the art, such as latex or acrylic. Finally, the carpet is subjected to a secondary coating 15 to provide sound insulation or sound absorption performance in order to ensure quietness in the automobile. It is also possible to apply 300 to 5000 gsm of PE or EVA or to attach a sound-absorbing nonwoven fabric. When the carpet is produced using the polyethylene terephthalate BCF according to the present invention, the same appearance as that of nylon is exhibited even with the yarn weight of the same face yarn as that of the nylon tufted carpet, and the abrasion resistance according to the MS343-15 standard is not less than grade 3, and thus the abrasion resistance can be improved.

Hereinafter, the present invention will be described in detail with reference to examples. However, the following examples are illustrative of the present invention, and the present invention is not limited by the following examples.

[Example 1]

A slurry prepared by mixing 50 parts by weight of ethylene glycol with 100 parts by weight of terephthalic acid was added into an esterification reactor and pressurized at 250°C for 4 hours under a pressure of 66.7 Pa (0.5 torr) to allow water to flow out of the reactor and allow the esterification reaction to be performed, to thereby prepare (2-hydroxyethyl) terephthalate. At this time, 300 ppm of a phosphorus heat stabilizer was added at the end of the esterification reaction. After the esterification reaction, 300 ppm of the antimony catalyst was added as an polymerization catalyst at the beginning of the polycondensation reaction, the temperature was raised from 250°C to 285°C at 60°C/hr, and the pressure was reduced to 66.7 Pa (0.5 torr). Solid phase polymerization is carried out to increase the viscosity of the liquid polymer. During the process of solid phase polymerization in general, the batch solid phase polymerizer is used to dry for 4 hours at 140°C under vacuum condition. The temperature is raised from 235°C to 245°C for 4 hours to 6 hours until reaching the final target viscosity.

The polyethylene terephthalate polymer produced through the spinneret having 128 holes and a Y-shaped cross-section is melt-spun at 290°C. The polymer exiting the spinneret is cooled by cooling air at 20°C at the bottom of the nozzle at 0.5 m/s, and then passes through the emulsion feeder. The yarn to which the emulsion has been applied passes through a feed roller maintained at a temperature of 90°C at a speed of 598 m/min and then stretched at a rate of 2,840 m/min at 190°C on the stretching roller. The yarn passed through the stretching roller passes the texturing nozzle and is given a crimp. At this time, the hot air temperature is 200°C, the pressure is 686 kPa (7 kg/$cm^2$), and the back pressure is 490 kPa (5 kg/$cm^2$). Thereafter, the yarn was rapidly cooled with cooling air at the outlet of the texturing nozzle at the temperature and pressure shown in the following Table 1, and relaxed by about 21% after passing the relax roller at 2250 m/min. After being interlaced at a pressure of 392 kPa (4.0 kg/$m^2$), it is wound in a winding machine.

[Examples 2 and 3]

Polyethylene terephthalate BCF yarn was prepared through the same procedure as in Example 1, except that the yarn was rapidly cooled with cooling air or cooling water at the temperature and pressure shown in Table 1 at the outlet of the texturing nozzle.

[Example 4] (not according to the invention)

Except that instead of cooling the yarn with cooling air at the outlet of the texturing nozzle, air was sucked through a cooling drum disposed within 1 cm immediately below the texturing nozzle to quench the air, polyethylene terephthalate BCF yarn was prepared through the same process as in Example 1.

[Comparative Example 1]

Polyethylene terephthalate BCF yarn was produced in the same manner as in Example 1, except that the yarn was cooled with cooling air at the temperature and pressure shown in Table 1 at the outlet of the texturing nozzle.

[Comparative Example 2]

A nylon BCF yarn was produced in the same manner as in Example 1 except that nylon was used in place of the polyethylene terephthalate polymer and the yarn was cooled with cooling air at the outlet of the texturing nozzle at the temperature and pressure shown in Table 1 below.

[Experimental Example 1]

The crimp ratios of the polyethylene terephthalate and nylon BCF prepared in Examples 1 to 4 and Comparative Examples 1 and 2 were measured by the following methods, and the results are shown in Table 1 below.

A skein was made by winding the yarn once around a reel of 1 m in circumference.

Next, the yarn is dipped in a boiling water at 100°C for 5 minutes, then the yarn is conditioned for 20 minutes after taking the yarn out from the oven. After that, the length L0 was measured 60 seconds after hanging the weight of the additional load (Denier * 0.1 g), then the weight of the old load (Denier * 0.01 g) was hung after the additional load was removed, and the length L1 was measured after 60 seconds, then the crimp ratio (%) was calculated by the following formula.

$$\text{Crimp Ratio (\%)} = \{(L0-L1)/L0\}X100$$

[Table 1]

| | Material | Denier/fila. | Cooling method | temp(°C) | Pressure kPa (kgf) | Crimp ratio (%) |
|---|---|---|---|---|---|---|
| Example 1 | PET | 1200/128 | Cooling air | 10 | 294 (3) | 18.2 |
| Example 2 | PET | 1200/128 | Cooling air | 10 | 490 (5) | 19.4 |
| Example 3 | PET | 1200/128 | Cooling water | 5 | 294 (3) | 21.3 |
| Example 4 | PET | 1200/128 | Air suction | - | - | 21.6 |
| Comparative Example 1 | PET | 1200/128 | Air | 25 | 294 (3) | 10.5 |
| Comparative Example 2 | Nylon | 1200/128 | Air | 25 | 294 (3) | 11.7 |

Referring to Table 1, it can be seen that the polyethylene terephthalate BCF produced according to the example is manufactured by cooling the yarn having a higher temperature by passing through the texturing unit as quickly as possible, thereby lowering the heat shrinkage rate of the yarn and improving the crimp ratio. Further, as the crimp ratio is improved, the bulkiness of the yarn itself is increased, so that the yarn can have a rich feeling of appearance and a volume feeling even with a small yarn weight.

On the other hand, in the case of the BCF produced according to the comparative example, the yarn passed through the texturing unit was not rapidly cooled, and the shrinkage progressed continuously until the temperature became high enough to cool, and the crimp ratio decreased as the heat shrinkage ratio increased.

[Examples 5 to 7 and Comparative Examples 3 to 4]

A polyethylene terephthalate BCF yarn was obtained through the same procedure as in Example 1 except that the modification ratio of the yarn (the ratio of the circumscribed circle (Y2) to the inscribed circle (Y1) = Y2/Y1) is adjusted, respectively, as in Table 2, to thereby prepare a tufted carpet. The abrasion resistance of each prepared tufted carpet was measured as follows, and the results are shown in Table 2 below.

Related test method Specification: ASTM D3884
Test method: Hyundai Motor MS300-35
Test equipment: Taber abrasion tester
Sample size: 130mm diameter circular sample

Exam conditions

1) Wear wheel: H-18
2) Rotation speed: 70 times / minute
3) Load: 1000g
4) Number of revolutions: 1000
5) Evaluation method: Appearance evaluation 1st to 5th grade (Passed grade 3 or higher (3, 4, 5 grade) of MS343-15 of Hyundai Motor Company)
6) Evaluation criteria: At grade 5, no abrasion is observed, at grade 4, abrasion is slightly visible or almost inconspicuous, at grade 3, abrasion is visible, at grade 2, abrasion is slightly severe, and at grade 1, abrasion is fairly severe.

[Table 2]

| | Modification ratio | Weight of yarn(g/$m^2$) | Volume feeling of appearance | Abrasion (grade) |
|---|---|---|---|---|
| Example 5 | 2.0 | 305 | Good | 3 |
| Example 6 | 2.5 | 305 | Good | 3 |
| Example 7 | 3.0 | 305 | Good | 3 |
| Comparative example 3 | 1.6 | 305 | Not good | 3 |
| Comparative example 4 | 3.5 | 305 | Good | 2 |

Referring to Table 2, it can be seen that when the cross-sectional modification ratio is controlled in the range of 1.9 to 3.4 according to the present invention (Examples 5 to 7), the volume feeling and wear resistance of the outer appearance are excellent. On the other hand, in the case of the cross-sectional modification ratio lower than the above range (Comparative Example 3), the volume feeling of the yarn is lowered, and when it exceeds the above range (Comparative Example 4), the wear resistance is lowered.

Therefore, when the carpet is produced using the polyethylene terephthalate BCF according to the present invention, the volume feeling and the quality of the abrasion resistance of the outer appearance can be improved even with a yarn having the same weight as that of nylon.

While the present invention has been particularly shown and described with reference to exemplary embodiments thereof, it will be understood by those skilled in the art that various changes and modifications may be made without departing from the scope of the invention as defined in the appended claims. It will be understood by those skilled in the art that various changes in form and details may be made therein without departing from the scope of the invention

Accordingly, the technical scope of the present invention should not be limited to the contents described in the detailed description of the specification, but should be defined by the claims.

Description of Symbols

| | | | |
|---|---|---|---|
| 1: | spinneret | 2: | filament |
| 3: | cooling zone | 4: | finishing applicator |
| 5: | feed roller | 6: | stretching roller |
| 7: | texturing unit | 8: | Cooling Drum |
| 9: | relax roller | 10: | collator |
| 11: | final winder | 12: | face yarn(BCF) |
| 13: | first base foil | 14: | coating layer |
| 15: | second coating layer | | |

**Claims**

1. A method for producing a polyethylene terephthalate (PET) bulked continuous filament (BCF) yarn for use in an automobile carpet having a crimp ratio of 16% or more, wherein the filaments have a Y-shaped cross section and a cross-sectional modification ratio of 1.9 to 3.4, wherein the modification ratio is the ratio of the circumscribed circle (Y2) to the inscribed circle (Y1), (Y2)/(Y1), and wherein the fineness of the polyethylene terephthalate yarn is 777.7 to 1666.5 dtex (700 to 1500 denier) and the dtex per filament value of the polyethylene terephthalate yarn is 6.67 to 22.22 (6 to 20 denier per filament),
wherein the crimp ratio was determined as follows:

    - preparing a skein by winding a BCF yarn once around a reel of 1 m in circumference,
    - dipping the yarn in boiling water at 100°C for 5 minutes, then conditioning the yarn for 20 minutes after taking the yarn out from the oven,
    - thereafter measuring the length L0 60 seconds after hanging the weight of the additional load of Denier 0.1 g, then hanging the weight of the old load of Denier * 0.01 g after removing the additional load, and measuring the length L1 after 60 seconds,
    - calculating the crimp ratio (%) by the following formula

$$\text{Crimp Ratio (\%)} = \{(L0-L1)/L0\}X100;$$

    wherein the method comprises the following steps:
    melt spinning of polyethylene terephthalate chips at 245-335°C by passing the same through a spinneret (1);
    cooling the spun yarn at a cooling zone (3) with air at a speed of 0.2 to 1.0 m/s and at a cooling temperature adjusted to 10 to 30°C;
    performing oiling as a spin finish step in a finishing applicator (4);
    feeding the oiled yarn to a stretching roller (6) at a speed of 300 to 1,200 m/min on a feed roller (5), wherein stretching is carried out by operating the stretching roller (6) at a speed of 2.0 to 5.0 times the speed of the feed roller (5);
    passing the yarn that has passed through the stretching roller (6) through a texturing unit (7) having a texturing nozzle for imparting a bulking property; wherein a heating fluid of 150 to 270°C is sprayed in the texturing unit (7) with a pressure of 294 to 981 kPa (3 to 10 $kg/cm^2$) to thereby cause the filament to crimp irregularly in three dimensions;
    cooling the yarn that has passed through the texturing unit (7) through a cooling section (8), where the yarn is quenched with cooling water or cooling air having a temperature of 5 to 10°C;
    passing the cooled yarn through a relax roller (9) at a speed of 0.65 to 0.95 times the speed of the stretching roller (6) to give an over feed rate of 5 to 35 %, wherein the over feed rate (%) = (V1-V2)/V1*100, wherein V1 is the speed of the stretching roller (6) and V2 is the speed of the relax roller (9); and
    after passing the relax roller (9), passing the yarn through a collator (10), wherein a slight twist and a knot are given at a pressure of 19.6 to 78.5 kPa (2.0 to 8.0 $kg/m^2$) in the range of 0 to 40 times/m.

2. The method of claim 1, wherein the BCF yarn has a fineness of 944.35 to 1499.85 dtex (850 to 1350 denier) and a dtex per filament value of 11.11 to 16.67 (10 to 15 denier per filament).

**3.** Use of a BFC yarn obtained by the method of claim 1 for producing a tufted carpet for automobiles, the tufted carpet comprising: a pile layer including said BFC yarn; and at least one backing layer, wherein the pile layer of said tufted carpet weighs 180 gsm to 700 gsm.

**4.** The use of claim 3, wherein said tufted carpet has a wear resistance level according to MS343-15 standard of grade 3 or more.

**5.** A BFC yarn obtained by the method according to claim 1 or 2.

**Patentansprüche**

**1.** Verfahren zur Herstellung eines gekräuselten Polyethylenterephthalat (PET)-Endlosfilamentgarns (PET-BCF-Garns) zur Verwendung in einem Kraftfahrzeugteppich mit einem Kräuselverhältnis von 16 % oder mehr, wobei die Filamente einen Y-förmigen Querschnitt und ein Querschnitt-Modifizierungsverhältnis von 1,9 bis 3,4 aufweisen, wobei das Modifizierungsverhältnis das Verhältnis des umbeschriebenen Kreises (Y2) zu dem einbeschriebenen Kreis (Y1), (Y2)/(Y1), ist und wobei die Feinheit des Polyethylenterephthalat-Garns 777,7 bis 1666,5 dtex (700 bis 1500 Denier) beträgt und der dtex pro Filament-Wert des Polyethylenterephthalat-Garns 6,67 bis 22,22 (6 bis 20 Denier pro Filament) beträgt,
wobei das Kräuselverhältnis wie folgt bestimmt wurde:

- Herstellen eines Strangs durch einmaliges Wickeln eines BCF-Garns um eine Spule mit einem Umfang von 1 m,
- Tauchen des Garns in siedendes Wasser bei 100 °C für 5 Minuten, dann Konditionieren des Garns für 20 Minuten nach dem Entnehmen des Garns aus dem Ofen,
- danach Messen der Länge L0 60 Sekunden nach dem Hängen des Gewichts der zusätzlichen Belastung von Denier * 0,1 g, dann Hängen des Gewichts der alten Belastung von Denier * 0,01 g nach dem Aufheben der zusätzlichen Belastung und Messen der Länge L1 nach 60 Sekunden,
- Berechnen des Kräuselverhältnisses (%) durch die folgende Formel

$$\text{Kräuselverhältnis (\%)} = \{(L0\text{-}L1)/L0\}X100;$$

wobei das Verfahren die folgenden Schritte umfasst:

Schmelzspinnen von Polyethylenterephthalat-Spänen bei 245-335 °C durch Führen derselben durch eine Spinndüse (1);
Kühlen des gesponnenen Garns in einer Kühlzone (3) mit Luft bei einer Geschwindigkeit von 0,2 bis 1,0 m/s und bei einer Kühltemperatur, die auf 10 bis 30 °C eingestellt ist;
Durchführen eines Ölens als Spinnfertigbearbeitungsschritt in einem Fertigbearbeitungsapplikator (4);
Zuführen des geölten Garns zu einer Streckwalze (6) mit einer Geschwindigkeit von 300 bis 1200 m/min auf einer Zuführungswalze (5), wobei das Strecken durch Betreiben der Streckwalze (6) bei einer Geschwindigkeit des 2,0- bis 5,0-fachen der Geschwindigkeit der Zuführungswalze (5) durchgeführt wird;
Führen des Garns, das über die Streckwalze (6) geführt worden ist, durch eine Texturierungseinheit (7), die eine Texturierungsdüse zum Verleihen von Kräuseleigenschaften aufweist; wobei ein Heizfluid von 150 bis 270 °C in der Texturierungseinheit (7) mit einem Druck von 294 bis 981 kPa (3 bis 10 kg/$cm^2$) gesprüht wird, wodurch bewirkt wird, dass das Filament unregelmäßig in drei Dimensionen gekräuselt wird;
Kühlen des Garns, das durch die Texturierungseinheit (7) geführt worden ist, durch einen Kühlabschnitt (8), wo das Garn mit Kühlwasser oder Kühlluft mit einer Temperatur von 5 bis 10 °C abgeschreckt wird;
Führen des gekühlten Garns über eine Relaxierungswalze (9) mit einer Geschwindigkeit des 0,65 bis 0,95-fachen der Geschwindigkeit der Streckwalze (6), so dass eine Überzuführungsrate von 5 bis 35 % erhalten wird, wobei die Überzuführungsrate (%) = (V1-V2)/V1*100 ist, wobei V1 die Geschwindigkeit der Streckwalze (6) ist und V2 die Geschwindigkeit der Relaxierungswalze (9) ist; und
nach dem Führen über die Relaxierungswalze (9), Führen des Garns durch einen Kollator (10), wobei bei einem Druck von 19,6 bis 78,5 kPa (2,0 bis 8,0 kg/$m^2$) in dem Bereich von 0 bis 40 Mal/m eine geringfügige Verdrillung und ein Knoten bereitgestellt werden.

2. Verfahren nach Anspruch 1, wobei das BCF-Garn eine Feinheit von 944,35 bis 1499,85 dtex (850 bis 1350 Denier) und einen dtex pro Filament-Wert von 11,11 bis 16,67 (10 bis 15 Denier pro Filament) aufweist.

3. Verwendung eines BFC-Garns, das durch das Verfahren nach Anspruch 1 erhalten worden ist, zur Herstellung eines getufteten Teppichs für Kraftfahrzeuge, wobei der getuftete Teppich umfasst: eine Florschicht, die das BFC-Garn umfasst; und mindestens eine Trägerschicht, wobei die Florschicht des getufteten Teppichs 180 g/$m^2$ bis 700 g/$m^2$ wiegt.

4. Verwendung nach Anspruch 3, wobei der getuftete Teppich ein Abnutzungsbeständigkeitsniveau gemäß dem MS343-15-Standard vom Grad 3 oder mehr aufweist.

5. BFC-Garn, das durch das Verfahren nach Anspruch 1 oder 2 erhalten worden ist.

**Revendications**

1. Procédé de production d'un fil de filaments continus gonflants (BCF) de polytéréphtalate d'éthylène (PET) destiné à être utilisé dans un tapis de véhicule automobile présentant un pourcentage de frisure de 16 % ou plus, dans lequel les filaments présentent une section transversale en forme de Y et un rapport de modification de section transversale de 1,9 à 3,4, dans lequel le rapport de modification est le rapport entre le cercle circonscrit (Y2) et le cercle inscrit (Y1), (Y2)/(Y1), et dans lequel la finesse du fil de polytéréphtalate d'éthylène est de 777,7 à 1 666,5 dtex (700 à 1500 deniers) et la valeur dtex par filament du fil de polytéréphtalate d'éthylène est de 6,67 à 22,22 (6 à 20 deniers par filament),
dans lequel le pourcentage de frisure a été déterminé comme suit :

- la préparation d'un écheveau en enroulant un fil BCF une fois autour d'une bobine de 1 m de circonférence,
- le trempage du fil dans de l'eau bouillante à 100 °C pendant 5 minutes, puis le conditionnement du fil pendant 20 minutes après la sortie du fil du four,
- puis la mesure de la longueur L0 60 secondes après l'accrochage du poids de la charge supplémentaire de Denier* 0,1 g, puis l'accrochage du poids de l'ancienne charge de Denier* 0,01 g après l'élimination de la charge supplémentaire, et la mesure de la longueur L1 après 60 secondes,
- le calcul du pourcentage de frisure (%) par la formule suivante

$$\text{Pourcentage de frisure } (\%)=\{(L0-L1)/L0\}X100\ ;$$

dans lequel le procédé comprend les étapes suivantes :

le filage par fusion de copeaux de polytéréphtalate d'éthylène à 245-335 °C en faisant passer ces derniers à travers une filière (1) ;
le refroidissement du fil filé au niveau d'une zone de refroidissement (3) avec de l'air à une vitesse de 0,2 à 1,0 m/s et à une température de refroidissement réglée de 10 à 30 °C ;
la réalisation d'un ensimage en tant qu'étape d'huilage de filature dans un applicateur de finition (4) ;
l'introduction du fil ensimé dans un rouleau d'étirement (6) à une vitesse de 300 à 1 200 m/min sur un rouleau d'alimentation (5), dans lequel l'étirement est mis en œuvre par l'opération du rouleau d'étirement (6) à une vitesse de 2,0 à 5,0 fois la vitesse du rouleau d'alimentation (5) ;
le passage du fil qui a traversé le rouleau d'étirement (6) à travers une unité de texturation (7) présentant une buse de texturation pour conférer une propriété gonflante ; dans lequel un fluide chauffant de 150 à 270 °C est pulvérisé dans l'unité de texturation (7) à une pression de 294 à 981 kPa (3 à 10 kg/$cm^2$) pour ainsi provoquer une frisure irrégulière du filament en trois dimensions ;
le refroidissement du fil qui a traversé l'unité de texturation (7) à travers une section de refroidissement (8), où le fil est trempé avec de l'eau de refroidissement ou de l'air de refroidissement présentant une température de 5 à 10 °C ;
le passage du fil refroidi à travers un rouleau détendeur (9) à une vitesse de 0,65 à 0,95 fois la vitesse du rouleau d'étirement (6) pour donner un taux de suralimentation de 5 à 35 %, dans lequel le taux de suralimentation (%)=(V1-V2)/V1*100, dans lequel V1 est la vitesse du rouleau d'étirement (6) et V2 est la vitesse du rouleau détendeur (9) ; et
après le passage du rouleau détendeur (9), le passage du fil à travers une interclasseuse (10), dans lequel une légère torsion et un nœud sont donnés à une pression de 19,6 à 78,5 kPa (2,0 à 8,0 kg/$m^2$) dans la plage

de 0 à 40 fois/m.

2. Procédé selon la revendication 1, dans lequel le fil BCF présente une finesse de 944,35 à 1 499,85 dtex (850 à 1 350 deniers) et une valeur de dtex par filament de 11,11 à 16,67 (10 à 15 deniers par filament).

3. Utilisation d'un fil BFC obtenu par le procédé selon la revendication 1 pour produire un tapis tufté pour véhicules automobiles, le tapis tufté comprenant : une couche de poils comportant ledit fil BFC ; et au moins une couche de support, dans laquelle la couche de poils dudit tapis tufté pèse de 180 g/$m^2$ à 700 g/$m^2$.

4. Utilisation selon la revendication 3, dans laquelle ledit tapis tufté présente un niveau de résistance à l'usure selon la norme MS343-15 de grade 3 ou plus.

5. Fil BFC obtenu par le procédé selon la revendication 1 ou 2.

Fig. 1

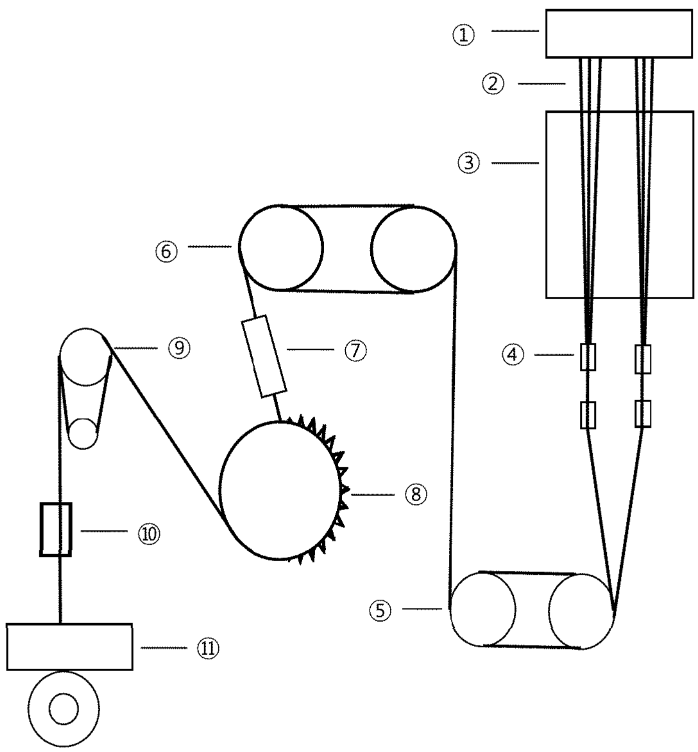


Fig. 2

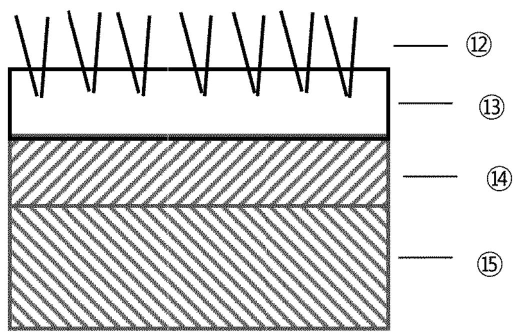

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013102787 A
- JP H08127916 A